# EUROPEAN PATENT APPLICATION

(11) **EP 1 492 003 A2**
(43) Date of publication of application: **29.12.2004**
(21) Application number: 04102709.5
(22) Date of filing: 15.06.2004
(51) Int. Cl.: G06F 9/46

(54) **Sharing computer objects with associations**

(30) Priority: 26.06.2003 US 609186
(71) Applicant: MICROSOFT CORPORATION, Redmond, Washington 98052-6399 (US)
(72) Inventor: Marcjan, Cezary, 98052, Redmond (US)
(74) Representative: Zimmer, Franz-Josef, Dr.

(57) **Abstract**

A method of sharing computer objects between computer spaces is provided. The method includes storing association information relating to associations between a selected object in a first computer space and other objects in the first computer space. The selected object is shared from the first computer space to or with a second computer space. For example, a user copies the selected object from one computer to another. As is common, the second computer space also includes objects that are common to objects in the first computer space. The method automatically shares from the first computer space to the second computer space associations between the shared (e.g., copied) object and the other objects that are common to the first and second computer spaces. The automatic sharing of associations when an object is shared allows the associations to be used in the new computer space to determine relationships and access to the shared object.

## Description

### Technical Field

The present invention relates to sharing computer objects between computer spaces and, in particular, to utilizing associations that computer objects have between each other in the sharing of computer the objects.

### Background and Summary

Computer objects are commonly shared between computer spaces. Computer files are copied from one computer to another. Computer messages are sent between computers. Computer users give each other access to different sets of computer files or different computer file directories. And there are many other ways in which computer objects are shared between computer spaces.

Typically, the sharing of computer objects is controlled solely by the user who initiates the share. The user determines what computer space or spaces the object is to be shared with, performs the share, and then must maintain the sharing of the object as computer spaces change over time. As an example, the object to be shared may be one or more files, and the computer space or spaces may be the people who have access to the files.

A problem with conventional sharing of computer objects is that the users who control the sharing must pay attention to all computer spaces (e.g., other users) with which the object is being shared, and must also pay attention to changes in those computer spaces over time (e.g., coworkers who are assigned to or re-assigned from a group). Meticulous care in the sharing of objects can be tedious and time-consuming. However, lack of attention in the sharing, or maintenance of shares, of computer objects can cause lapses in the security of computer objects.

Accordingly, an automatic context association system has been developed to identify associations between computer objects. The context association system provides access to computer files, documents, contacts, etc. (i.e., "objects) based upon contextual associations that are determined automatically based upon user interactions with the objects.

In the context of such a system, the present invention provides a method of sharing computer objects between computer spaces. The method includes storing association information relating to associations between a selected object in a first computer space and other objects in the first computer space. The selected object is shared from the first computer space to or with a second computer space. For example, a user copies the selected object from one computer to another.

As is common, the second computer space also includes objects that are common to objects in the first computer space. The method then automatically shares from the first computer space to the second computer space associations between the shared (e.g., copied) object and the other objects that are common to the first and second computer spaces. The automatic sharing of associations when an object is shared allows the associations to be used in the new computer space to determine relationships and access to the shared object.

As another aspect of the invention, the sharing of an object from one computer space to another may be conditioned upon the extent of associations that the new computer space has to the object. Associations may be strong, moderate, weak, non-existent, or anything in between. Whenever the sharing of an object is initiated and the extent of association to the object in the new computer space is below a threshold amount, the sharing can be deferred until the lack of association is approved or accepted.

The present invention utilizes the associations that objects have in the sharing of the objects between computer spaces. These associations can prevent or defer object shares if the extent of association in a new computer space is too weak. Also, by automatically carrying or sharing them when an object is shared, the associations of the object are available in each computer s[pace where the object resides.

Additional objects and advantages of the present invention will be apparent from the detailed description of the preferred embodiment thereof, which proceeds with reference to the accompanying drawings.

### Brief Description of the Drawings

Fig. 1 is a functional block diagram of an automatic context association system that automatically determines context associations between user computer activities, computer objects (e.g., files, contacts, etc.), and other events.

Fig. 2 is a detailed block diagram of one implementation of a data collection system in the context association system of Fig. 1.

Fig. 3 is a flow diagram of an association sharing method in which association metadata are carried with computer objects that are shared between computer spaces.

Fig. 4 is a schematic illustration of a computer copying operation for copying a computer object from one computer space to another computer space.

Fig. 5 is a flow diagram of an association-controlled sharing method in which computer objects are shared between computer spaces according to the extent of associations between the computer spaces.

Fig. 6 is a schematic illustration of a sharing operation in which access to a computer objects is shared among multiple users.

Fig. 7 is a schematic block diagram of an automatic context association schema in accordance with the present invention.

Fig. 8 is a schematic diagram of an objects type table that is optionally included in context association schema.

Fig. 9 is a schematic block diagram of a simplified automatic context association schema in accordance with the present invention.

### Detailed Description of Preferred Embodiments

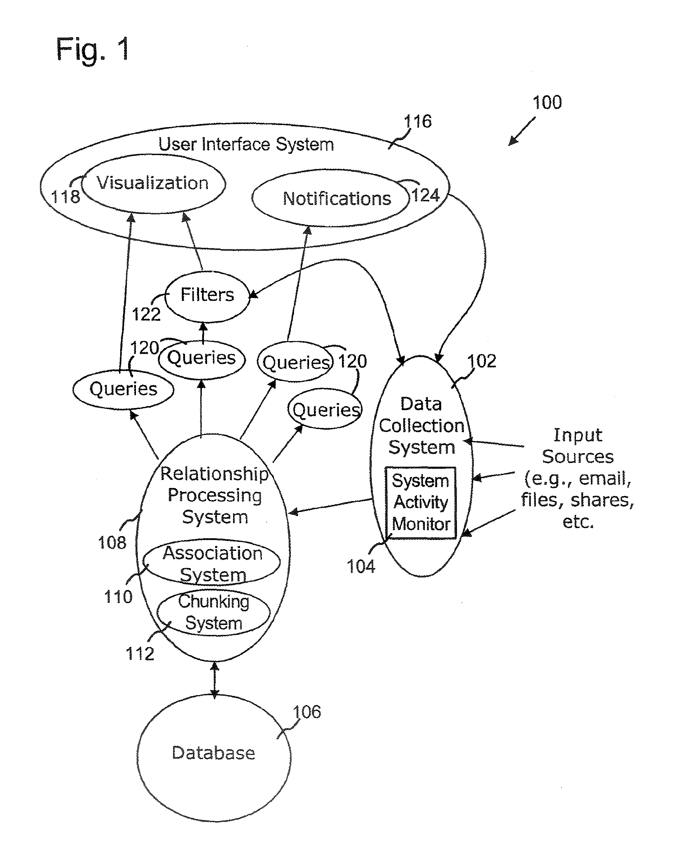

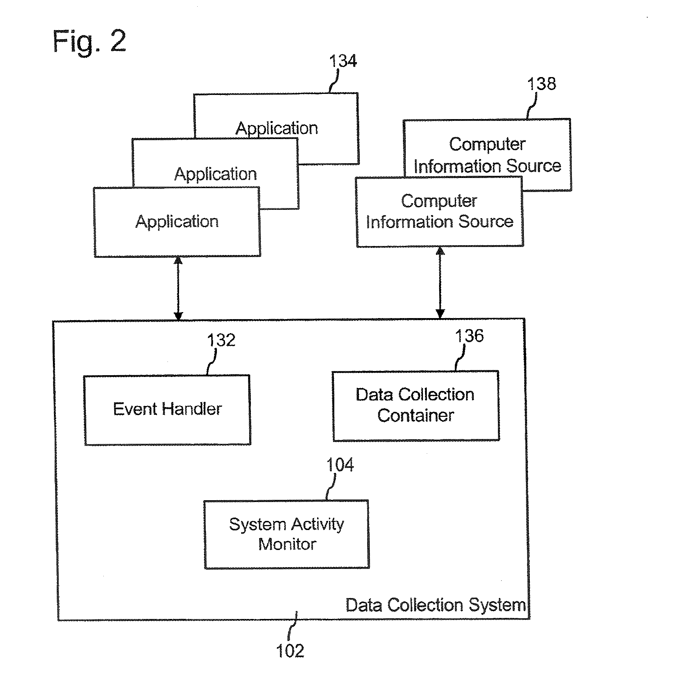

The present invention relates to sharing computer objects (e.g., applications, files, communications, etc.) between different computer spaces. The computer spaces may refer to different portions of a computer network (e.g., public and private portions or "folders"), different computers, different computer access rights of different computer users, different computer users, etc. The sharing of the computer objects utilizes associations that are determined from user interactions with the objects. Such user interactions may be obtained from an automatic context association system of the type described with reference to Figs. 1 and 2. It will be appreciated, however, that the sharing of computer objects according to the present invention could alternatively be employed in other systems that establish associations between user interactions.

Fig. 1 is a functional block diagram of an automatic context association system 100 that automatically determines context associations between user computer activities, computer objects (e.g., files, contacts, etc.), and other events. The context associations allow context association system 100 to provide users with automatic access to related computer files, contacts, and information (referred to generally as objects).

As described below, context associations between the objects may include similarities between them and their importance. The importance of and similarities between objects may be determined from user computer interactions with the objects. The user computer interactions may occur on a conventional desktop or laptop computer, or any other user-operated computing device such as a handheld computer, a digital cellular telephone, etc. For purposes of simplicity, these types of devices are referred to herein generally as computers. Context association system 100 may be implemented as software that is stored on and executed by one or more such computers.

Context association system 100 includes a data collection system 102 that collects data relating to user computer activities, computer actions, interactions between the user and various computer objects (e.g., applications, files, communications, etc.), and other events. For example, data collection system 102 may collect data relating to computer system events (e.g., the operation of applications or other software elements, various operations on computer files, sharing of computer data or other objects, etc.) computer communications (e.g., email communications, instant messaging communications, etc.), and external data (e.g., news, events, etc.)

In one implementation, data collection system 102 may include a system activity monitor 104, for example, that monitors user activity on a user-operated computer (not shown). System activity monitor 104 may be implemented as a computer program to which other applications, or the operating system, provide information of user computer activities, such as search queries, the opening or modification of a document or other file, etc. For example, while objects may exhibit many properties, searches performed by a user and the search results can indicate which properties are most important for the user. For each such activity, system activity monitor 104 creates or adds to a record of information (sometimes called "metadata") that is stored in a computer system database 106.

For example, system activity monitor 104 may include a universal input activity monitor that provides a single entry point for all user interactions with the computer, or at least specified user interactions with the computer. In this universal input implementation, system activity monitor 104 may determine and store as metadata in computer system database 106 any or all of the following: input method data (e.g., text, speech, mouse, etc.), input language data (English, Chinese, etc.), input mode data (e.g., dictation or typed command), input assistance data (e.g., typed word completion, command guessing, etc.), input feedback data (e.g., whether the computer needs additional information, corrections of wrong guesses by the computer, etc.), etc. For instance, if a user copies or stores a picture in a web browser, system activity monitor 104 could store the network address (e.g., Uniform Resource Locator, URL) of the source page, as well as the URL of the image itself, as metadata in computer system database 106.

Computer system database 106 stores information (e.g., "metadata") about computer files stored on and activities carried out on a computer. The metadata may include conventional information, such as is conventional for computer-generated documents, including when the file was created, who created it, and a modification history. Also, some types of computer file types may have specific metadata fields that are not applicable to other file types. For instance, the metadata fields for a photo file type may include the size of the image, where the picture was taken, who took it, who is in it, etc. In one implementation, new metadata fields can be added to database system 106 to accommodate new file types or to store new information about an existing file type.

Table 1 A lists exemplary information that may obtained by system activity monitor 104 and stored in computer system database 106. With regard to the various computer files and computer information (referred to collectively as objects) a computer user might interact with, system activity monitor 104 may collect data relating to any or all of the creator/author of the object, the type of the object, any pointer to the object (if available), activation events, object size, etc. For example, system activity monitor 104 may obtain the information about the objects with which a computer user interacts, determine whether the objects are new or unique relative to other objects listed in computer system database 106 (e.g., based upon a unique object identifier), and aggregate or store the activities in computer system database 106 in association with the unique object identifier of the object.

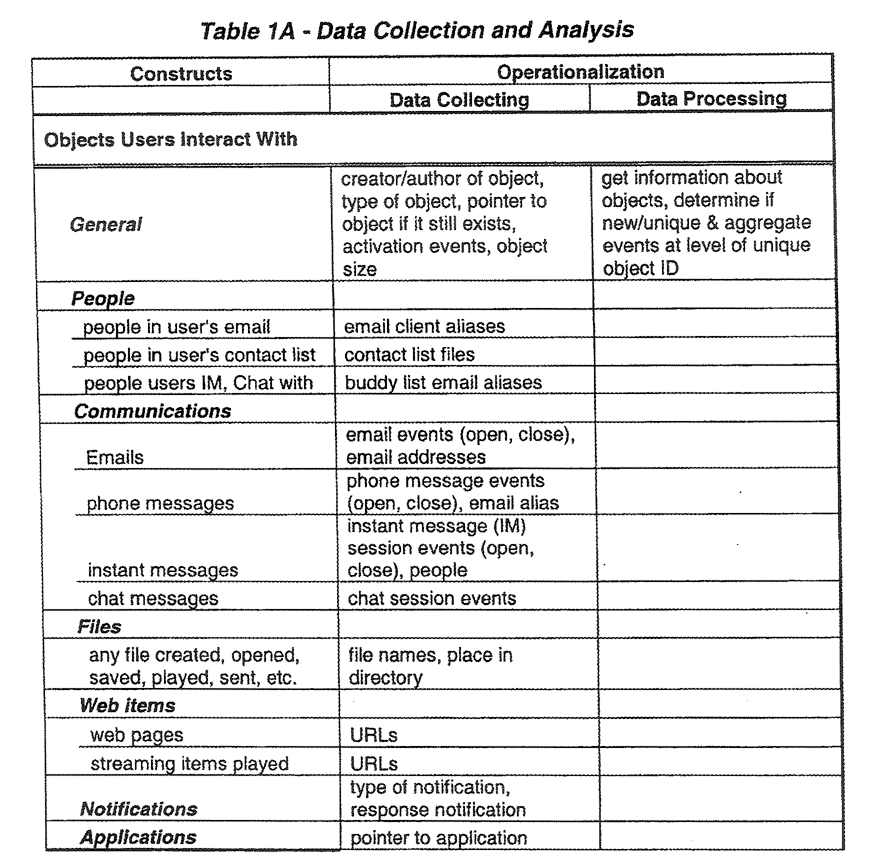

The objects with which the computer user interacts may be associated with other people, communications with other people, computer files, network or Web items, computer system notifications, and applications run on or accessible by the computer. System activity monitor 104 can obtain and store in computer system database 106 for each of the listed types of exemplary information.

Context association system 100 includes a relationship processing system 108 that determine one or more relationships between objects or metadata obtained by data collection system 102 or stored in computer system database 106. In one exemplary implementation, relationship processing system 108 includes a similarity or association system 110 that determines a degree of similarity or association between at least a pair of computer files or objects. Similarity or the degree of association may be represented, for example, as a numeric value between 0 and 1, where 1 would be identity between objects and 0 would indicate they are completely unrelated. Association system 110 may be implemented as one or more programs that, for a given target file and a collection of other files, return a similarity ranking between them.

It will be appreciated that different types of documents, files, or objects can have different types of similarity. For instance, two photos can look similar, could be taken at similar times, could be of a similar person, place, or event, could be the same color, could have been sent to the same people or printed together, could be parts of the same photo (e.g., one could have been cut from the other), etc. Table 1B lists exemplary associations or similarities that association system 110 may identify and store in computer system database 106. As indicated, the associations or similarities may relate to objects or files having shared content, occurring at similar times or similar computer locations (e.g., computer, directory, etc.), being sent to or received from a common person, are be linked together.

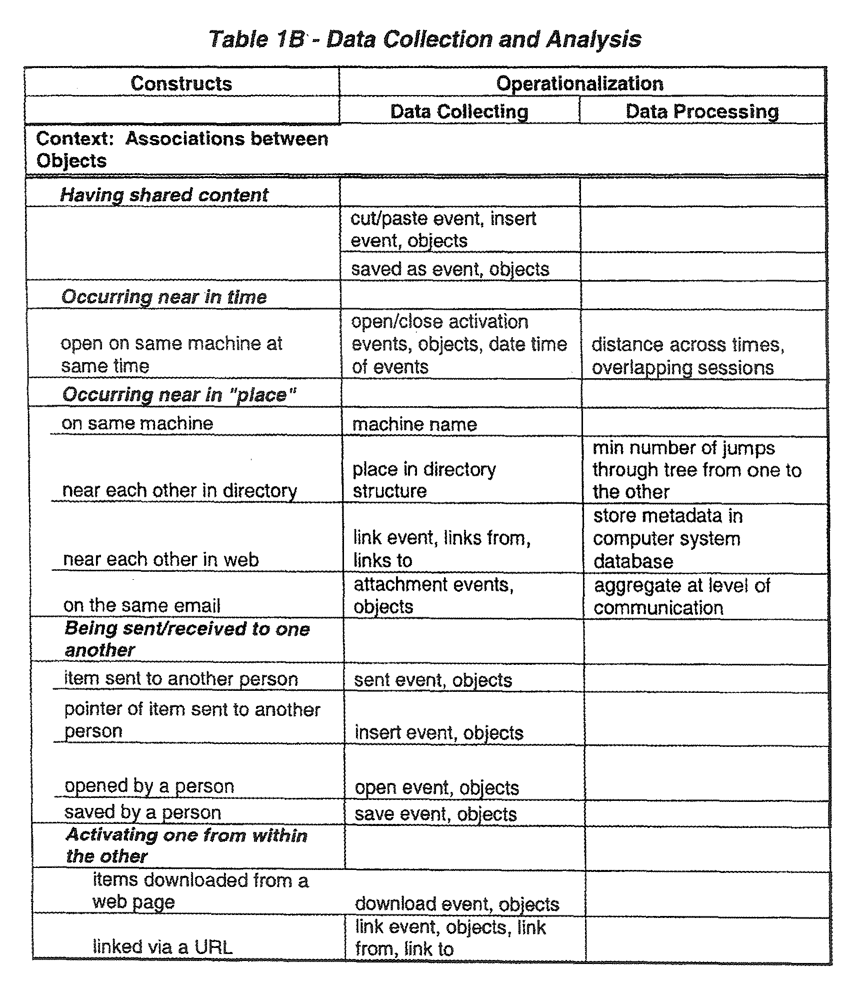

In one implementation, association system 110 could be instructed to ignore certain types of similarity, or to weight one type of similarity more heavily than another. Moreover, the associations or similarities tracked and identified by association system 110 could be extensible.

In addition, objects with which a user interacts can be of a different importance or significance to the user. For instance, a document that a user keeps open and edits of an extended period could be deemed to be of greater importance than a document that is opened for only a brief period of time. Likewise, a photo that is accessed and opened repeatedly could be deemed to be of greater importance that a photo that is only opened once. Table 1 C lists exemplary factors by which association system 110, for example, could determine and store in computer system database 106 the relative importance of objects. As indicated, the importance factors may relate to the duration of user interactions, the frequency of interactions, the recency of interactions, as well as the immediacy of user responses, the amount of copying, duplication, and backups, and the extent objects are shared.

**Table 1C -**

| ***Data Collection and Analysis*** | | |
|---|---|---|
| **Constructs** | **Operationalization** | |
| | **Data Collecting** | **Data Processing** |
| **Importance of Objects** | | |
| ***Duration of interaction*** | | |
| | open and close activation events, object | session times calculated by min max time/date, then summed by object |
| | keyboard events, mouse events, object | summed by object |
| ***Frequency of interaction*** | | |
| | activation events, date/times | count of unique activations/sessions |
| ***Recency of interaction*** | | |
| | activation events, date/times | get maximum date |
| ***Immediacy of response* to** | | |
| | | difference in time |
| ***Copying*, *duplication, backups*** | print, save as, multiple versions | |
| ***Sharing*** | show during meeting, share via email, etc. | |

Relationship processing system 108 may further include a chunking system 112 that uses the degrees of similarity or association determined by similarity or association system 110 for an arbitrarily large set of objects or files and groups or "chunks" them into a specified number of sub-groups. For instance, given 100 photos, chunking system 112 could separate them into any number of sub-groups or chunks based on one or more criteria such as the dates they were taken, or who is in the photos, for example. The criteria to be used by chunking system 112 may be pre-defined or specified by a user, for example, and in one implementation can place the same item into several chunks (e.g., a picture of Bob and Sue would go into a Bob chunk as well as a Sue chunk). Chunking system 112 may be implemented as one or more programs stored on the computer.

A context association user interface system 116 utilizes information stored in computer system database 106 by system activity monitor 104, as well as information determined by similarity or association system 110 and chunking system 112 to display visualizations 118 illustrating context associations between computer system files, computer information, and other information. Visualizations 118 may be based upon the results of database queries 120 to which, in some instances, data filters 122 are applied. In addition, user interface system 116 can provide application and system notifications 1243, as described below in greater detail.

Accordingly, context association system 100 accommodates innate human memory, which works by association so that events are often remembered as happening in relationship to other events. In contrast, conventional computer file systems force users to use and remember arbitrary, out-of-context filing structures. With the significant numbers of computer files and objects that many users interact with, conventional out-of-context filing structures can make it difficult, or impossible, for users to find and access computer information that was worked on or viewed in the past. Context association system 100 allows a user to view and assign searchable metadata and to retrieve documents, objects or files that match selected metadata.

Fig. 2 is a detailed block diagram of one implementation of data collection system 102. In addition to system activity monitor 104 for monitoring user computer activity, for example, data collection system 102 can also include any or all of the following, including an event handler 132 through which one or more applications 134 (including other software services) send metadata information about application events to data collection system 102 and receive metadata information about application events from data collection system 102. Applications 134 may be separate from an underlying operating system for the computer, or may be services or features provided by the operating system.

A data collection container 136 operates to control system activity monitor 104, event handler 132, and any other data collection modules, and particularly controls data collection relating to system activity, copy and paste between documents, incoming and outgoing messages, opening shared files, etc. In addition, data collection container 136 can operate to obtain or receive common data (like weather, news), other than data relating specifically to operation or use of the computer, from one or more separate computer information sources 138 (e.g., public servers).

Applications 134 running on a computer with automatic context association system 100 could register with event handler 132 to receive enhanced document management functionality. In particular, data collection container 136 supports cross-application integration that allows collection of data or information about cross-application events, such as copy and paste between documents, attaching a document to an email message, etc., thereby allowing relationships between objects to be determined or derived by relationship processing system 108. Moreover, applications 134 can interact directly with data collection system 102 to provide contextual information not readily available to system activity monitor 104. For example, if an email attachment is saved to disk as a separate file, the email application 134 may create a link between this file and the original email message (and, by extension, with the message sender). Control system activity monitor 104 and event handler 132 allow data to be collected at high efficiency and at a high granularity level, and with the minimal amount of processing required. In addition, data collection system 102 in one implementation may be extensible to allow for the installation of additional data collectors that may be developed in the future.

In one implementation users are notified that the data is collected and what it is used for. Users are provided one or more controls to selectively enable or disable the data collection, or explicitly adjust the importance of objects and their association weights, as described below. In other implementations, the ways in which the data is collected may be modified automatically based on how the data is used. While data is typically collected at the level of an individual user and computer, it will be appreciated that the data from multiple users and their computers could be combined. For such a shared data implementation, system 100 will provide unique identifiers for the data, objects and sessions, consistent handling of to- and from- fields for communications, replication of event identifiers across computers in shared sessions, privacy, and so forth.

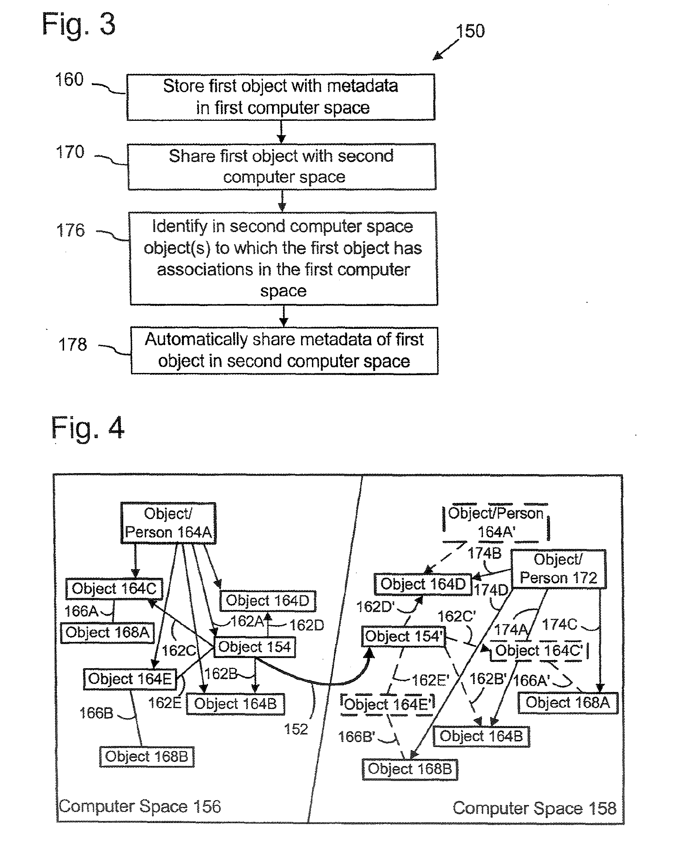

Fig. 3 is a flow diagram of an association sharing method 150 in which association metadata are carried with computer objects that are shared between computer spaces. Computer spaces may refer to different portions of a computer network (e.g., public and private portions or "folders"), different computers, different computer access rights of different computer users, etc.

Fig. 4 is a schematic illustration of a computer copying operation 152 for copying a computer object 154 (e.g., computer file, message, person contact, etc.) from one computer space 156 (e.g., a computer, computer storage area, network location, user access space, etc.) to another computer space 158 (e.g., a computer, computer storage area, network location, user access space, etc.). Association sharing method 150 is described with reference to the copying operation 152 illustrated in Fig. 4.

In step 160, a first computer object (e.g., object 154) is stored in a first computer space (e.g., computer space 156) with association metadata. The association metadata represents one or more associations between the first computer object (e.g., object 154) and various other objects stored on the first computer space.

In the illustration of Fig. 4, for example, the association metadata, or associations, are represented as links between objects. Computer object 154 has direct associations 162A-162E with respective objects 164A-164E, in which object 164A represents a person associated with or operating computer space 156. Object 154 also has indirect associations 166A and 166B with objects 168A and 168B through objects 164C and 164E, respectively. Associations 162A-162E and 168A-168B can represent various types of relationships, including one object or the other having been derived or copied from another, created by another (e.g., an object representing a person or user), transmitted together, created together, etc., as described below in greater detail.

Associations 162A-162D with directional indicators represent directional or "hard" relationships in which one object results from, defines, or encompasses another. Associations 162E, 166A, and 166B without directional indicators represent non-directional relationships, such as two objects having been created at the same time, being co-located in a computer space, or some other common property.

As indicated by their directional indicators, hard associations 162A-162D may be characterized as being unidirectional in that the association is valid only in one direction. One characterization of such hard associations is that "object 1 has full knowledge of object 2." Examples of hard associations are:
- A Messageto association between a person who received an email and an email message object or a document object attached to the email
- An 'email attachment from a person' association between a person1 and a document1 where document1 has been attached by person1 in an email message received by person2, who published this document on a computer network. This association could be called "message attachment association (obj1 is email message containing attachment obj2)," and together with a "MessageFrom" association can create a second-order association.
- A Container association between an object 1 and object 2 indicating that object 2 is contained within object 1
- A Derived association between an object 1 and object 2 indicating that object 1 was derived from object 2
It will be appreciated that these examples of hard associations are illustrative and that other hard associations may be included in a computer system employing association sharing method 150, or may be added or defined by users.

In step 170, the first computer object (e.g., object 154) is shared with a second computer space (e.g., computer space 158). For example, the sharing of object 154 may be in the form of copying object 154 from computer space 156 to computer space 158, thereby resulting in a copied or shared object 154' in computer space 158. The copying or sharing of 154' into computer space 158 is indicated by the "prime" indication at the end of the reference numeral. It will be appreciated that objects can be shared in a variety of ways, including moving computer objects, transmitting them (e.g., as email or in other computer communication formats), linking to them, allowing access to them by other users, etc.

Referring to Fig. 4, computer space 158 includes prior to copying operation 152 at least an object 172 representing a person associated with or using computer space 158, and objects 164B, 164D, 168A, and 168B, which are outlined in solid lines and are the same as the like-numbered objects in computer space 156. Associations 174A-174D relate objects 1648, 164D, 168A, and 168B to person object 172, for example. It will be appreciated that computer space 158 would typically include other objects as well. Objects 164B, 164D, 168A, and 168B are shown to illustrate aspects of association sharing method 150.

In step 176, the method identifies in the second computer space objects that are the same as (i.e., "match") objects in first computer space with which the first object has associations. For example, the method identifies in computer space 158 any objects that are the same as (i.e., "match") objects in computer space 156 with which object 154 has associations. In the operation of this step 176 during the copying 152 of object 154, objects 164B, 164D, 168A, and 168B would be identified in computer space 158.

In step 178, association metadata for the identified objects are automatically carried, copied or shared with the second computer space. With reference to Fig. 4, this provides for shared object 154' associations 162B' and 1620' to respective preexisting objects 164B and 164D in computer space 158. The sharing of associations 1628 and 162D from computer space 156 to associations 162B' and 162D' in computer space 158 is indicated by the "prime" indications on the reference numerals. The automatic sharing or copying of associations 162B' and 162D' in computer space 158 is indicated in Fig. 4 by broken line outlines of the objects. The sharing is automatic in that it is performed automatically by a computer without an explicit command by the user, other than simply sharing object 154.

In addition, association 166A' is provided for preexisting object 168A in computer space 158, and object 164C' and its association 162C' are also automatically shared to complete the indirect association to shared object 154'. Likewise, association 166B' is provided for preexisting object 168B in computer space 158, and object 164E' and its association 162E' are also automatically shared to complete the indirect association to shared object 154'. The automatic sharing or copying of associations 162C', 162E', 166A', and 166B', and objects 164C' and 164E' in computer space 158 is indicated in Fig. 4 by broken line outlines of the associations and objects.

The automatic sharing or copying of associations in step 178, including the automatic sharing or copying of objects to complete indirect associations, allows shared object 154' to have in computer space 158 the association information that object 154 had is computer space 156. This allows object 154' to be used in computer space 158 with the same association-based functionality as in computer space 156, including association-based security, association-based linking of related objects, association-based accessing of objects, etc.

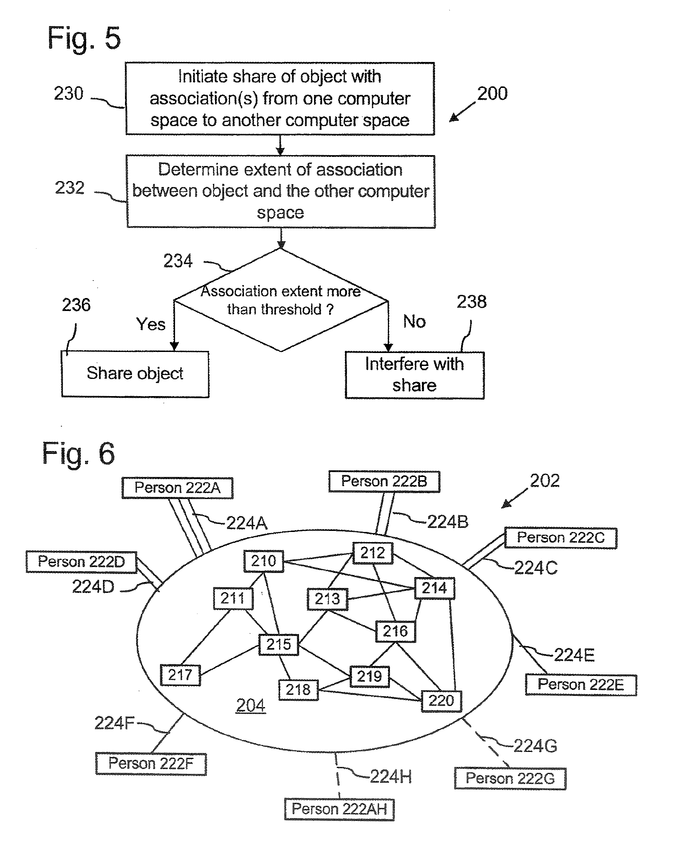

] Fig. 5 is a flow diagram of an association-controlled sharing method 200 in which computer objects are shared between computer spaces according to the extent of associations between the computer spaces. For example, association-controlled sharing method 200 can automatically provide security indications when objects are to be shared. Computer spaces may refer to different portions of a computer network (e.g., public and private portions or "folders"), different computers, different computer access rights of different computer users, different computer users, etc.

Fig. 6 is a schematic illustration of a sharing operation 202 in which access to a cluster 204 of closely associated objects 210-220 (e.g., computer files, computer folders, network spaces, etc.) is controlled by a first user 222A having a controlling association 224A with objects 210-220. ln accordance with the sharing operation 202 of Fig. 6, user 222A provides or attempts to provide to users 222B-222H access to objects 210-220. The operation of association-controlled sharing method 200 is described with reference to the sharing operation 202 of Fig. 6.

In step 230, a share of an object having one or more association is initiated from one computer space to another. For example, controlling user 222A indicates that users 222B-222H are to be given access to cluster 204 of objects 210-220. For purposes of this description, access to objects 210-220 by user 222A represents one computer space, and access by each of users 222B-222H a corresponding other computer space.

In step 232, an extent of association is determined between the object to be shared and the computer space the object is to be shared with. For example, an extent of association is determined between cluster 204 of objects 210-220 and each of users 222B-222H.

As an illustration, users 222B-222D may have strong associations 224B-224D (indicated by double lines) with objects 210-220, such as because users 222B-222D because already have strong associations with at least ones of the objects 210-220 in cluster 204, such as by having received or created ones of them previously. Users 222E and 222F may have moderate associations 224E and 224F (indicated by single lines) with objects 210-220, such as because users 224E and 224F have weaker or fewer associations than users 222B-222D, such as indirect associations to common subject matter. Finally, users 222G and 222H may have nonexistent or weak associations 224G and 224H (indicated by broken lines) that indicate minimal or no connection to objects 210-220.

In step 234, an inquiry is made as to whether the extent of association between the object to be shared and the computer space the object is to be shared with is greater than a threshold limit. Step 236 follows if the extent of association is greater than the threshold limit, and step 238 follows otherwise.

In step 236, the sharing of the object from one computer space to another is completed. Referring to Fig. 6, for example, the sharing of objects 210-220 with users 222B-222D, or users 222B-222F, may be completed.

In step 238, the sharing of the object from one computer space to another is interrupted. Referring to Fig. 6, the sharing of objects 210-220 with users 222G-222H, or users 222E-222H, may be interrupted. The interruption may be implemented as a hard block of the attempted sharing, or may simply include a warning to or query of the sharing user regarding the lack of association of the relevant computer spaces (e.g., users). In the latter case, the sharing may proceed with explicit approval by sharing user 222A.

It will be appreciated that methods 150 and 200 can operate alone or together. For example, associations that are shared automatically when an object is shared in method 150 may form the basis for later determining the extent of an association in method 200. Alternatively, the sharing of an object as in method of 150 may be conditioned upon the determination of the extent of an association as in method 200.

With regard to sharing operation 202, for example, access to cluster 204 can be automatically given to or taken away from persons depending on newly generated associations and modifications of existing associations. This way the shared space could automatically be maintained by the system to remove people or add people according to their associations. For example, when a person leaves a group or project, her association with that group or project is ended. She could then automatically be dropped from having access to cluster 204. When another person is given access to some of the important objects in cluster 204, that person could be automatically given access to all of cluster 204.

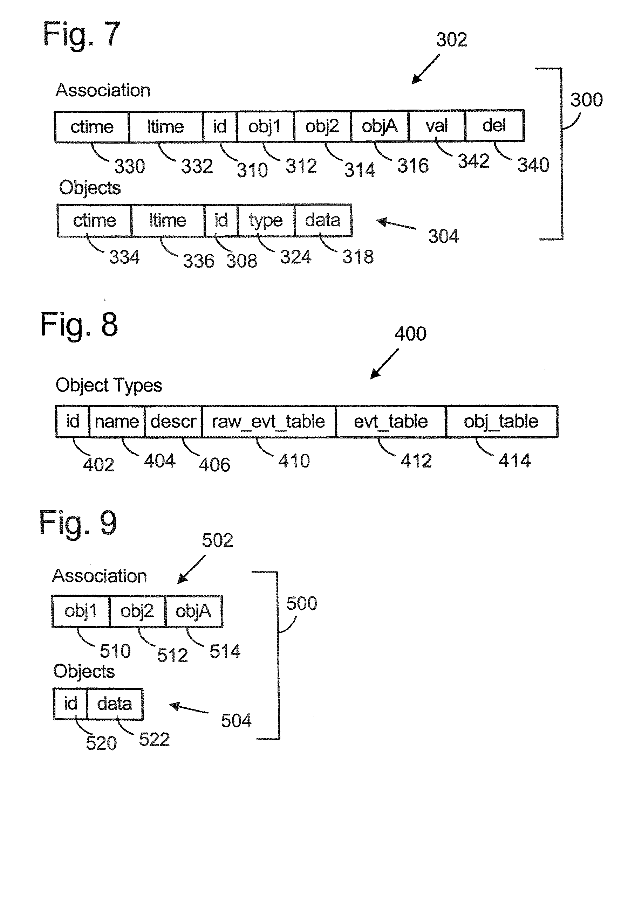

Fig. 7 is a schematic diagram of an automatic context association schema or data structure 300 in accordance with the present invention. The term schema refers generally to metadata, which is data describing other data. A schema generally defines the various parts and aspects of other data, in this case, the various parts and aspects of data obtained with respect to automatic context associations.

Automatic context association schema 300 has a series of association tables 302 and object tables 304 that are stored in a computer readable medium and include information about user interactions with various computer system objects, including documents, photos, web pages, and interaction with other people, in order to establish meaningful associations therebetween. Such information may be obtained by automatic context association system 100 of Figs. 1 and 2, for example, or by operation of another association system.

Association table 302, sometimes referred to as Assocs table 300, has type-independent entries that support linking of objects of different types. As a result, association table 302 includes a unique association identifier (id) field 310 that identifies an association or relationship between a pair of objects (e.g., document, person, web site, etc.). Each object is represented in an object table 304 by a unique identifier that is stored in an identifier field 308 (id) in object table 304.

Each row in association table 302 associates two objects, obj1 and obj2, with a third object, called an associating object, objA. The associated objects obj1 and obj2 and the associating object objA are indicated in association table 302 by fields 312, 314, and 316, respectively. The values of entries in obj1 field 312, obj2 field 314, and objA field 316 of association table 302 are the unique identifiers for those respective objects stored in a data field 318 and identified with id field 308 in object table 304.

The fields ctime 330 and ltime 332 of association table 302 are the creation time and the last usage time, respectively, of the association represented by association id 310 in that row in association table 302. Similarly, the fields ctime 334 and ltime 336 of object table 304 are the creation time and the last usage time, respectively, of the object represented by object id 308 in that row of object table 304. These ctime and ltime values may be used, for example, mainly in evaluations of objects and associations related to time durations and time decay.

The associated objects (obj1, obj2) represented in obj1 field 312 and obj2 field 314 can be of arbitrary type, but instances of each must exist with reference to entries in object table 304 for the specified unique identifiers (IDs). If an object is deleted, then all the associations of this object will be also deleted, such as by an indication in a deletion (del) field 340 that marks the association for later garbage collection, A value field 342 marks as a numeric value the degree or strength of association between the objects.

In particular, all entries in association table 302 are deleted in which the object IDs obj1 and obj2 are equal to the ID of a deleted object. If the associating object identifier indicated in objA field 316 references a deleted object, then the association is not deleted, but the identifier value of objA field 316 is changed to a predefined identifier (ID) of a static NULL object of the same type. In one implementation, there is one instance of a NULL object of each object type. identifiers of NULL objects are equal to identifiers of object types from an object type table 400 (Fig. 8).

Fig. 8 is a schematic diagram of an objects type table 400 that is optionally included in context association schema 300. Object type table 400 is referenced in the object table 304 in a type field 324 and describes object types. Type field 324 in object table 304, and object type table 400, are optional elements that can provide improved performance of the context association functionality by providing highspeed capture of interactions or events relating to selected objects.

An object type is identified by an identifier field is 402 and has a name field 404 (name), a description field 406 (descr), and three data table names. A raw_evt_table field 410 specifies the name of a raw events table that stores all raw events for this type of object. Raw events are collected events that do not reference any existing object in objects table 304. The raw events table is treated as a temporary table for capturing raw events and deriving from them object events and object instances.

An evt_table field 412 references an event table that contains entries referencing existing objects of this type, as derived from the raw events table. Typically, the object events in the event table describe user interactions with the objects, e.g. creation of the object, opening, saving, printing, deleting, etc. The events in the evt_table can be used to deduct the importance of the object for the user. An obj_table field 414 specifies the name of an object table that contains objects of the specified type, as derived from the raw events table. Examples of objects types that can be included in object type table 306 are indicated in Table 2.

**Table 2 -**

| **Object type table** | | | | | |
|---|---|---|---|---|---|
| **id** | **Name** | **descr** | **raw_evt_tabte** | **evt_table** | **obj_table** |
| 0 | Type | Represents object type | NULL | NULL | ObjectTypes |
| 1 | Association | Association object used for associating two other objects | NULL | NULL | Assocs |
| 1000 | Person | Representation of a person | NULL | NULL | People |
| 1001 | File | File (local, remove, or on removable media) | FileRawEvents | FileEvents | Files |
| 1002 | Email | EMail message | EmailRawEvents | EmailEvents | EmailMessages |
| 1003 | Application | Application instance | ApplicationRawEvents | ApplicationEvents | Applications |
| 1004 | WebPage | Web page | WebpageRawEvenis | WebpageEvents | Webpages |
| 1005 | Folder | Folder (local, remote, or on removable media) | FolderRawEvents | FolderEvents | Folders |
| 1006 | Event | Represents event | NULL | NULL | NULL |
| 1007 | RawEvent | Represents raw event | NULL | NULL | NULL |
| 1008 | GroupType | Represents group type object | NULL | NULL | NULL |
| 1009 | Group | Represents group object | NULL | NULL | NULL |
| 1010 | EmailServer | Represents email server | NULL | NULL | EmailServers |

For example, the File object type represents file objects and includes event tables for events involving user interactions with file objects, such as document files, picture files, spreadsheet files, etc. The Email object type represents email objects and includes event tables for events involving user interactions with email objects, such as email messages, email contacts, etc. The Application object type represents computer application objects and event tables for events involving user interactions with computer application objects, such as a word processing application, a spreadsheet application, a browser application, etc. The WebPage object type represents Web page objects and includes event tables for events involving user interactions with Web page objects, namely pages or network sites accessed over the World Wide Web, for example. The Folder object type represents folder objects and includes event tables for events involving user interactions with folder objects, such as the file management folders of an operating system.

The object table of each type (if specified) contains columns that are specific to the object type. For example, email messages will have different data columns than folders. Object tables for each type have an object identifier column that references existing objects in the object table 304.

With reference to Fig. 7, the associating object 316, objA, in associations table 302 is sometimes referred to as an association type if its identifier represents a "static" predefined object, rather than an instance of a dynamically created object. In one implementation, a predefined association set includes association types listed in an association information table (Table 3), wherein the association identifier (associd) in the association information table corresponds to the associating object field 316 (objA) of association table 302 and an object id field 308 of object table 304.

**Table 3 -**

| **Association Information Table** | | | | |
|---|---|---|---|---|
| **associd** | **assocname** | **Alternate assocname** | **assocdescr** | **Alternate assocdescr** |
| 2000 | container | container element | o1 contains o2 | o2 is an element of container o1 |
| 2001 | property | property owner | o1 is a property of o2 | o2 is a property o1 owner |
| 2002 | derived | base | o1 is derived from o2 | o2 is a base for o1 |
| 2003 | copy | original | o2 is a copy of o1 | o1 is original of a copy o2 |
| 2004 | attachment | attachment container | o1 is attachment of o2 | o2 contains attachment o1 |
| 2005 | bucket proximity | proximity bucket member | o1 is a proximity bucket for o2 | o2 is member of proximity bucket o1 |
| 2006 | category | category member | o1 contains o2 | o2 belongs to category o1 |
| 2010 | time co-occurrence | time co-occurrence | o1 and o2 co-occurred in time | o2 and o1 co-occurred in time |
| 2011 | co-location | co-location | o1 and o2 are co-located | o2 and o1 are co-located |
| 2012 | application | application data | o1 is application for o2 | o2 is data for application o1 |
| 2013 | U-I switch | Ul switch | there was an Ul switch from o1 to o2 | there was an Ul switch to o2 from o1 |
| 2014 | move | move | o2 is a copy of o1, o1 was deleted | o2 is a copy of o1, o1 was deleted |
| 2016 | copy/paste | copy/paste | there was a copy/paste operation from o1 to o2 | there was a copy/paste operation from o1 to o2 |
| 2017 | userassoc | userassoc | the user specified association between two objects | the user specified association between two objects |
| 2018 | message from | sender's message | o1 is sender of email message o2 | o2 is a message from sender o1 |
| 2019 | message to | recepient's message | o1 is recipient of email message o2 | o1 is recipient of email message o2 |
| 2020 | message cc | cc recepient's message | o1 cc recipient of email message o2 | o1 is cc recipient of email message o2 |
| 2021 | message bcc | bcc recepient's message | o1 bcc recipient of e-mail message o2 | o1 is bcc recipient of email message o2 |
| 2022 | opening proximity | opening proximity | o1 and o2 were opened together | o2 and o1 were opened together |
| 2025 | sending proximity | sending proximity | o1 and o2 were sent together | o1 and o2 were sent together |

| | | | | |
|---|---|---|---|---|
| 2026 | co-recipient | co-recipient | o1 and o2 are both recipients of the same mail | o1 and o2 are both recipients of the same mail |
| 2027 | co-sender | co-sender | o1 and o2 have the same sender | o1 and o2 have the same sender |
| 2028 | conversation | follow up | o1 is follow up conversation to o2 | o1 is follow up conversation to o2 |
| 2029 | closing proximity | closing proximity | o1 and o2 were closed together | o1 and o2 were closed together |
| 2030 | saving proximity | saving proximity | o1 and o2 were saved together | o1 and o2 were saved together |
| 2031 | manager | report of | o1 is manager of o2 | o2 reports to o1 |
| 2040 | thumbnaillmage | thumbnail original image | o1 is a original image for thumbnail o2 | o2 is a thumbnail image of o1 |
| 2041 | previewlmage | preview original image | o1 is a original image for preview o2 | o2 is a preview image of o1 |
| 2042 | GeoLocation | geolocation subject | o2 is geolocated by o1 | o1 is at Geo Location o2 |
| 2043 | CalendarEvent | calendar event | o2 is a calendar event for o1 | o1 is related to Calendar Event o2 |
| 2044 | publisher | published publication | o1 is sharing document o2 | o2 was shared by person o1 |
| 2045 | subscriber | subscribed publication | o1 received document o2 | o2 was received by person o1 |
| 2046 | author | authored publication | o1 modified document o2 | o2 was edited by person o1 |
| 2047 | consumer Sessions | used by | o1 is a consumer of o2 | o2 used by o1 |
| 2048 | consumerKey Clicks | used by | o1 is a consumer of o2 | o2 used by o1 |
| 2049 | consumerMouse Activity | | o1 is a consumer of o2 | |
| 2050-2099 | Reserved | Reserved | reserved | reserved |

The association information table (Table 3) illustrates exemplary associations that can be included in context association schema 300. For example, associations Messagefrom, Messageto, Messagecc, and Conversation represent computer communication relationships regarding email messages or conversations. Associations Move, Copy, and Copy/Paste represent editing relationships between objects. Various other individual associations are described in Table 3. The associations of Table 3 are listed with alternative names and descriptions to illustrate alternative characterizations of the indicated associations.

When a new type of association is created (as opposed to an association instance between objects), an entry in the association information table (Table 3) is added together with an instance of an association object in the object table 304. The object identifier 308 in object table 304 for the added association object is one of the identifiers from a "reserved" space (e.g., associd 2055-2099, Table 3) of association information table (Table 3). Entries in the type field 324 of the object table 304 for the object identifiers from 2000 to 2099 are of type "1," which in the object type table (Table 2) corresponds to object of type "Association."

Fig. 9 is a schematic block diagram of a simplified automatic context association schema 500 in accordance with the present invention. Automatic context association schema 500 has a series of association tables 502 and object tables 504 that are stored in a computer readable medium and include information about user interactions with various computer system objects, including documents, photos, web pages, and interaction with other people, in order to establish meaningful associations therebetween.

Context association schema 500 is simplified in relation to context association schema 300 in that the former includes a basic set of information fields for providing an operable context association schema according to the present invention. Association table 502 includes fields 510 and 512 for associated objects obj1 and obj2 and a field 514 for associating object objA. Object table 504 includes an identifier (id) field 520 and a data field 522. Fields 510, 512, 514, 520, and 522 correspond to and operate in the same manner as the fields in context association schema 300 with the same names.

In accordance with the practices of persons skilled in the art of computer programming, the present invention is described above with reference to acts and symbolic representations of operations that are performed by various computer systems and devices. Such acts and operations are sometimes referred to as being computer-executed and may be associated with the operating system or the application program as appropriate. It will be appreciated that the acts and symbolically represented operations include the manipulation by a CPU of electrical signals representing data bits, which causes a resulting transformation or reduction of the electrical signal representation, and the maintenance of data bits at memory locations in a memory system to thereby reconfigure or otherwise alter the computer system operation, as well as other processing of signals. The memory locations where data bits are maintained are physical locations that have particular electrical, magnetic, or optical properties corresponding to the data bits.

Having described and illustrated the principles of our invention with reference to an illustrated embodiment, it will be recognized that the illustrated embodiment can be modified in arrangement and detail without departing from such principles. ln view of the many possible embodiments to which the principles of our invention may be applied, it should be recognized that the detailed embodiments are illustrative only and should not be taken as limiting the scope of our invention. Rather, I claim as my invention all such embodiments as may come within the scope and spirit of the following claims and equivalents thereto.

## Claims

1. In a context association system for forming context associations between first and second objects that are stored in computer memory and are associated with each other based on user computer interactions, a method of sharing computer objects, comprising:
storing association information relating to one or more associations between a selected object in a first computer space and one or more first objects in the first computer space;
sharing the selected object from the first computer space with a second computer space, the second computer space including at least one of the first objects; and
automatically sharing from the first computer space with the second computer space the one or more associations in the first computer space between the selected object and the at least one first object in the second computer space.

2. The method of claim 1 further comprising:
storing in the first computer space association information relating to an association between the selected object and the second computer space; and
determining whether the association between the selected object and the second computer space is of an extent greater than a predetermined threshold;
wherein the selected object is shared from the first computer space with the second computer space upon a determination that the association between the selected object and the second computer space is of an extent greater than the predetermined threshold.

3. The method of claim 1 in which the one or more associations between the selected object in the first computer space and the one or more first objects in the first computer space include an indirect association between the selected object and a particular first object, the indirect association including a direct association between the selected object and an first object and a direct association between the intervening first object and the particular first object.

4. The method of claim 3 in which the second computer space includes the particular first object prior to the sharing of the selected object, the method further including automatically sharing from the first computer space with the second computer space the intervening first object, together with the direct association between the selected object and the intervening first object and the direct association between the intervening first object and the particular first object.

5. The method of claim 1 in which at least one of the one or more associations is unidirectional between the selected object the one of the first objects.

6. The method of claim 1 in which the selected object and the first objects include computer files.

7. The method of claim 1 in which at least one of the first and second computer spaces corresponds to a computer memory store.

8. The method of claim 1 in which at least one of the first and second computer spaces corresponds to an accessibility space of computer objects that are accessible by a user.

9. The method of claim 1 in which the sharing includes copying the selected object from the first computer space to the second computer space.

10. In a context association system for forming context associations between first and second objects that are stored in computer memory and are associated with each other based on user computer interactions, computer object sharing software stored in computer readable media, comprising:
software for storing association information relating to one or more associations between a selected object in a first computer space and one or more first objects in the first computer space;
software for sharing the selected object from the first computer space with a second computer space, the second computer space including at least one of the first objects; and
software for automatically sharing from the first computer space with the second computer space the one or more associations in the first computer space between the selected object and the at least one first object in the second computer space.

11. The software of claim 10 further comprising:
software for storing in the first computer space association information relating to an association between the selected object and the second computer space; and
software for determining whether the association between the selected object and the second computer space is of an extent greater than a predetermined threshold;
wherein the selected object is shared from the first computer space with the second computer space upon a determination that the association between the selected object and the second computer space is of an extent greater than the predetermined threshold.

12. The software of claim 10 in which the one or more associations between the selected object in the first computer space and the one or more first objects in the first computer space include an indirect association between the selected object and a particular first object, the indirect association including a direct association between the selected object and an intervening first object and a direct association between the intervening first object and the particular first object.

13. The software of claim 12 in which the second computer space includes the particular first object prior to the sharing of the selected object, the method further including automatically sharing from the first computer space with the second computer space the intervening first object, together with the direct association between the selected object and the intervening first object and the direct association between the intervening first object and the particular first object.

14. The software of claim 10 in which at least one of the one or more associations in unidirectional between the selected object the one of the first objects.

15. In a context association system for forming context associations between first and second objects that are stored in computer memory and are associated with each other based on user computer interactions, a method of sharing computer objects, comprising:
storing association information relating to one or more associations between a selected object in a first computer space and a second computer space;
initiating sharing of the selected object from the first computer space with the second computer space;
determining whether the association of the selected object with the second computer space is of an extent greater than a predetermined threshold; and
interfering with the sharing of the selected object with the second computer space if the association of the selected object with the second computer space is not of an extent greater than the predetermined threshold.

16. The method of claim 15 further comprising sharing the selected object from the first computer space with the second computer space if the association of the selected object with the second computer space is of an extent greater than the predetermined threshold.

17. The method of claim 16 further including automatically sharing from the first computer space with the second computer space an association in the first computer space between the selected object and a first object that is in both the first computer space and the second computer space.

18. The method of claim 17 in which association is unidirectional between the selected object the first object.

19. In a context association system for forming context associations between first and second objects that are stored in computer memory and are associated with each other based on user computer interactions, computer object sharing computer software in computer readable media, comprising:
software for storing association information relating to one or more associations between a selected object in a first computer space and a second computer space;
software for initiating sharing of the selected object from the first computer space with the second computer space;
software for determining whether the association of the selected object with the second computer space is of an extent greater than a predetermined threshold; and
software for interfering with the sharing of the selected object with the second computer space if the association of the selected object with the second computer space is not of an extent greater than the predetermined threshold.

20. The software of claim 19 further comprising software for sharing the selected object from the first computer space with the second computer space if the association of the selected object with the second computer space is of an extent greater than the predetermined threshold.

21. The software of claim 20 further including software for automatically sharing from the first computer space with the second computer space an association in the first computer space between the selected object and a first object that is in both the first computer space and the second computer space.
